# EUROPÄISCHE PATENTSCHRIFT

(11) **EP 0 564 846 B1**
(45) Veröffentlichungstag und Bekanntmachung des Hinweises auf die Patenterteilung: **14.05.1997**
(21) Anmeldenummer: 93104151.1
(22) Anmeldetag: 15.03.1993
(51) Int. Cl.: B32B 27/32, B32B 3/02

(54) **Matte, biaxial gereckte Polypropylenfolie, Verfahren zu ihrer Herstellung**
Biaxially stretched polypropylene foil mat and process for its manufacture
Feuille matte en polypropylène, étirée biaxialement et son procédé de fabrication

(30) Priorität: 27.03.1992 DE 4209918
(43) Veröffentlichungstag der Anmeldung: 13.10.1993
(73) Patentinhaber: Wolff Walsrode Aktiengesellschaft, D-29655 Walsrode (DE)
(72) Erfinder: Blum, Thomas, Dr., W-3033 Schwarmstedt (DE); Schinkel, Ingo, Dipl.-Ing., W-3030 Walsrode (DE); Krallmann, Anton, Dipl.-Ing., W-3032 Fallingbostel 1 (DE)
(74) Vertreter: Braun, Rolf, Dr.

(56) Entgegenhaltungen:
- EP-A- 0 044 544
- EP-A- 0 053 925
- EP-A- 0 122 495
- EP-A- 0 353 368
- EP-A- 0 508 415
- US-A- 3 843 478

## Beschreibung

Die Erfindung betrifft matte, mehrschichtige Propylenfolien, die durch mindestens eine einseitige, coextrudierte Schicht aus einer Polymermischung ihr mattes Aussehen erhalten.

Es ist bereits eine Vielzahl von matten, biaxal gereckten Polypropylenfolien bekannt.

So wird in DE-A 3 231 013 speziell eine Polypropylenfolie mit einer rauhen Oberfläche beschrieben, die dadurch hergestellt wird, daß man die Folie vor dem Verstrecken einer Bestrahlung mit hochenergetischer Strahlung aussetzt.

In JP 9 148 661 wird ein Verfahren geschildert, wie man mit Sandstrahlen oder mit einem chemischen Ätzverfahren eine rauhe Oberfläche auf einer biaxial gereckten Polypropylenfolie erzeugt.

Eine zunehmende Semi-Opazität durch den Zusatz von organischen Peroxiden zu Propylen-Ethylen-Blockcopolymeren und zu Polyethylen basierenden Copolymeren wird in JP 2 103 214 beschrieben.

Dagegen begründen in DE-A 3 839 120 5 bis 10 % anorganische Füllstoffe, die über die ganze Dicke einer orientierten Polypropylenfolie eingesetzt werden, eine rauhe Oberfläche.

Eine einseitig matte Beschichtung aus anorganischem und/oder organischem Mattierungsmittel mit einem Esterharz, das aus organischen Lösungsmitteln aufgebracht wird, wird in EP-A 262 953 beschrieben.

Rauhe Oberflächen werden in JP 8 038 157 und JP 3 129 264 durch a- und β-Sphärolite des Polypropylens erzeugt.

In einer Reihe von Patenten werden matte Folien beschrieben, bei denen der Matteffekt durch Blockcopolymere des Propylens und des Ethylens oder durch Mischen von Polypropylenhomo- und/oder Copolymerisaten mit Polyethylen hervorgerufen wird.

So wird in JA 6 032 668 eine nicht glänzende, biaxiale Polypropylenfolie beschrieben, die über die ganze Foliendicke hin aus einem Blend aus Polypropylen mit 10 bis 65 % Polyethylen besteht.

Eine mehrschichtige Folie mit geringem Oberflächenglanz wird dadurch hergestellt, daß ein monoaxial verstreckter Polypropylenfilm mit einem Gemisch aus Propylen-Ethylen-Copolymer und High Density Polyethylen laminiert wird und das Laminat eine gemeinsame Querverstreckung erfährt (JP 8 001 525).

EP-A 122 495 beschreibt einem mindestens 2-schichtigen, biaxial gereckten Polypropylenfilm, bei dem mindestens eine Schicht aus einem Polyolefin mit einem Ethylenanteil von 10 bis 50 Gew.-% besteht. Als Beispiel wird ein Ethylenpropylenblockcopolymer mit 3 Schmelzbereichen zwischen 120 und 160°C beschrieben.

EP-A 44 544 beschreibt eine mehrschichtige, gereckte Polypropylenfolie mit einem zweischichtigen Polypropylenaufbau, auf den zusätzlich eine mono- oder biaxial verstreckte Propylen-Ethylen-Blockcopolymerschicht aufgebracht ist. Außerdem wird die Option einer zusätzlichen Klebeschicht offengehalten.

Einen nicht glänzenden, laminierten Film, der durch biaxiales Verstrecken von Polypropylen, das 10 bis 50 % Ethylen enthält, hergestellt wird, beschreibt JP 0 184 840.

Auch JP 0 054 783 beschreibt eine biaxial gereckte Folie, die eine rauhe Oberfläche durch ein Propylen-Ethylen-Blockcopolymer hat.

Matte Oberflächen können auch durch Laminieren von einseitig gerecktem Ethylen-Propylen-Copolymeren auf eine biaxial-gereckte Polypropylenfolie erhalten werden.

Die Verfahren zur Herstellung von biaxial gereckten Polypropylenfolien sind teilweise recht aufwendig oder mit hohen Investitionen verbunden (z.B. chem. Ätzverfahren, Sandstrahlen, Elektronenstrahlhärtung, Lackieren). Andere Folien erfüllen hinsichtlich der optischen Eigenschaften, Siegelfähigkeit oder Bedruckbarkeit der matten Schicht die Anforderungen des Marktes nicht. Deshalb war es Aufgabe der vorliegenden Erfindung zum einen, den Marktanforderungen gerecht zu werden und zum anderen, auf bestehenden Anlagen mit den vorhandenen Coextrusionseinrichtungen für biaxial gerecktes Polypropylen eine Mattfolie herzustellen.

Gegenstand der vorliegenden Erfindung sind matte, zwei- oder mehrschichtige, biaxial gereckte Polypropylenfolien aus einer außen liegenden Mattschicht M, einer Kernschicht K und wahlweise weiteren Schichten S, die sich auf der gegenüberliegenden Seite der Mattschicht an die Kernschicht anschließen, sowie Polymermischungen, aus denen die Mattschicht hergestellt werden kann, dadurch gekennzeichnet, daß die Mattscheibe M eine Schichtdicke von 0,5 bis 5,0 µm hat und mindestens aus
- 30 - 70 %: eines oder mehreren Polypropylen-Polyethylen-Blockcopolymeren
- 2 - 18 %: eines auf Ethylen basierenden Co- oder Terpolymeren, modifiziert mit polaren Gruppen
- 68 - 2 %: eines aus Propylen/Ethylen/Butylen aufgebauten statistischen Co- und/oder Terpolymer mit Propylen als Hauptkomponente
- 0 - 5 %: eines Polyamids
- 0 - 5 %: einer natürlichen oder synthetischen Kieselsäure
aufgebaut ist, wobei die o.a. Komponenten im Anlieferungszustand und/oder in Form von Batchen aus diesem eingesetzt werden,
daß die Kernschicht K
aus einem thermoplastischen Polymer und/oder Copolymer des Propylens, das mit üblichen Slip-, Antistatik- und/oder Antiblockmitteln ausgerüstet sein kann,
daß die Schichten S,
die sich auf der gegenüberliegenden Seite der Mattschicht an die Kernschicht K anschließen,
entweder aus einem thermoplastischen Polypropylen,
das mit üblichen Slip-, Antistatik- und/oder Antiblockmitteln ausgerüstet sein kann,
und/oder aus einem thermoplastischen, statistischen Copolymeren
des Polypropylens mit einem oder mehreren α-Olefinen mit 2 bis 6 C-Atomen, das mit üblichen Slip-, Antistatik- und/oder Antiblockmitteln ausgerüstet sein kann,
oder aus einer heißkaschierbaren
Schicht aus Mischungen aus Ethylen basierenden Copolymeren,
oder aus einer Schichtenkombination der o.a. Schichten S bestehen.

Als Ausgangsmaterialien für die Mattschicht M dienen:
1. Polypropylen-Copolymerisate, die aus Propylen und α-Olefinen vorzugsweise Ethylen nach einem Verfahren der Blockpolymerisation (Solvay Informationen) oder heterophasische Copolymerisate des Ethylens und Propylens ("Polypropylen, Moplen®", Himont Information oder kautschuk-modifiziertes Polypropylen oder PP-Blockcopolymere und Reaktorblends (Dr. Harald Schwager, Novolen®-Block-Copolymere und Reaktorblends in Fachtagung Novolen® für Spritzguß und Extrusion, BASF, Ludwigshafen 1991).
2. Lineare Copolymere des Ethylens, niedriger Dichte, die modifiziert sind und/oder Polyethylene niedriger Dichte, die kautschuk-modifiziert sind und eine Anhydridfunktionalität aufweisen und/oder Terpolymere des Ethylens mit Acrylsäureestern und Maleinsäureanhydrid.
3. Statistische Propylen/Ethylen Copolymere mit 2 bis 6 Gew.-% Ethylen oder statistische Terpolymere aus Propylen, Ethylen und Butylen mit einem Comonomergehalt von < 15 Gew.-% und mit einem Butylengehalt von < 7 Gew.-%.
4. Polyamid 12 und/oder
   Polyamid 6 und/oder
   Polyamid 6.6 und/oder
   Polyamid 6.12 und/oder
   Polyamide mit aliphatischen, cycloaliphatischen und aromatischen Grundbausteinen.
5. Synthetische und/oder natürliche Kieselsäure/SiO₂-Teilchen mit einer Teilchengröße < 10 µm.

Als Ausgangsmaterialien für die Kernschicht K dienen:
ein isotaktisches Polypropylen mit einem n-heptanlöslichen Anteil von 15 Gew.-% oder weniger, mit einer Dichte von 0,90 bis 0,91 g/cm³ und einem Schmelzflußindex von 0,5 g/10 min bis 8 g/10 min bei 230°C und 21,2 N Belastung (bestimmt nach DIN 53735) besonders bevorzugt wird ein Polypropylen mit einem Schmelzflußindex von 1 bis 4 g/10 min
   und/oder
ein statistisches Propylen/Ethylen Copolymeres mit 2 bis 6 Gew.-% Ethylen, mit einer Dichte von vorzugsweise 0,895 bis 0,960 g/cm³, einem Schmelzindex von 1 bis 7 g/10 min bei 230°C und 21,2 N Belastung und einem Kristallitschmelzpunkt je nach Typ im Bereich von 125 bis 148°C (unter dem Polarisationsmikroskop)
   und/oder
ein Propylen/Butylen/Ethylencopolymer mit einem Comonomergehalt von vorzugsweise < 15 Gew.-% und einem Butylengehalt von vorzugsweise < 7 Gew.-% mit einem vorzugsweisen Schmelsflußindes von 0,1 bis 16 g/10 min bei 230°C und 21,2 N Belastung, besonders bevorzugt von 4 bis 10 g/10 min bei 230°C und 21,2 N.

Als Ausgangsmaterialien für die Schichten S dienen:
isotaktisches Polypropylen und/oder statistische Co- und/oder Terpolymere, die auch als Ausgangsmaterialien für die Kernschicht dienen
   und/oder
ein Gemisch für eine Heißkaschieranwendung, daß in der bevorzugten Ausführungsform aus Ethylenvinylacetat-Copolymeren A und mindestens einem weiteren Copolymeren aus der Gruppe der Ethylen-Ethylacrylat-Copolymeren B1 oder der Gruppe der Ethylen-Acrylsäure-Copolymeren B2 besteht.
Das Ethylenvinylacetat-Copolymer A) enthält in einer bevorzugten Ausführungsform 70 bis 95, insbesondere 75 bis 95 Gew.-% polymerisierte Ethyleneinheiten, wobei in einer besonders bevorzugten Ausführungsform der restliche Anteil im wesentlichen oder vollständig aus polymerisiertem Vinylacetat besteht.
Das Ethylen-Ethylacrylat-Copolymer B1) enthält in einer bevorzugten Ausführungsform im wesentlichen polymerisierte Ethyleneinheiten, insbesondere wenigstens 88 Gew.-% polymerisierte Ethyleneinheiten, insbesondere 88 bis 92 Gew.-% polymerisierte Polyethyleneinheiten, wobei die restlichen Anteile im wesentlichen oder vollständig aus polymerisiertem Ethylacrylat bestehen.
Das Ethylen-Acrylsäure-Copolymer B2) besteht in einer bevorzugten Ausführungsform im wesentlichen aus polymerisierten Ethyleneinheiten, insbesondere wenigstens 85 Gew.-% polymerisierten Ethyleneinheiten, besonders bevorzugt zu 85 bis 95 Gew.-% aus polymerisierten Ethyleneinheiten, wobei die restlichen Anteile im wesentlichen oder vollständig aus Polymerisierter Acrylsäure bestehen.
Das Ethylenvinylacetat-Copolymer A hat vorzugsweise einen Schmelzflußindes von 0,1 bis 15 g/10 min bei 230°C und 21,2 N, besonders bevorzugt von 0,3 bis 8 g/10 min bei 230°C und 21,2 N.

Ein weiterer Gegenstand ist ein Verfahren zur Herstellung der Folie der genannten Art, das dadurch gekennzeichnet ist, daß nach bekanntem Verfahren ein 2-3-schichtiger Film coextrudiert wird. Dieser coextrudierte Film wird nach dem Verlassen der Breitschlitzdüse derart abgekühlt, daß die Mattschicht eine möglichst langsame Abkühlung erfährt. Anschließend wird der Film erneut auf ca. 100 bis 130°C aufgeheizt und erfährt eine Längsreckung im Verhältnis von 3 bis 7 - vorzugsweise von 4 bis 5. Nach der Längsreckung erfolgt bei Temperaturen zwischen 150 und 170°C eine Querreckung im Verhältnis 7 bis 12 - vorzugsweise 8 bis 9. Vor dem Auslauf aus dem Recktunnel wird der Film thermofixiert. Er wird vor dem Aufwickeln mindestens auf einer Seite mit einer Coronaentladung oder mit einer Flammvorbehandlung behandelt.

Eine Alternative beziehungsweise Ergänzung zu dem oben geschilderten Verfahren zur Herstellung einer 3-4-schichtigen Folie ist eine 2-3-Schicht-Coextrusion der Mattschicht M, der Kernschicht K und bei Bedarf einer Schicht S, die zuerst, wie oben geschildert, gemeinsam längsverstreckt werden. Zwischen dem Auslauf des Längsstreckenteiles und dem Einlauf in den Querreckteil erfolgt nun, wie in EP 0 424 761 A2 geschildert, eine Laminierung oder Extrusion mit einer weiteren Schicht S. Nach dem Aufbringen dieser Schicht erfolgt eine gemeinsame Querverstreckung des Folienverbundes im Verhältnis 1:7 bis 1:12 - vorzugsweise im Verhältnis von 1:8,5 bis 1:9,5 der wie üblich eine Thermofixierung und Coronabehandlung beziehungsweise Flammvorbehandlung folgt.

Für den Fachmann war es überraschend, daß durch Zugabe eines auf Ethylen basierenden Co- oder Terpolymeren, das mit polaren Gruppen modifiziert ist, in den angegebenen Konzentrationsbereichen zu Gemischen aus Blockcopolymeren mit Randomcopolymeren und gegebenenfalls Polyamiden und SiO₂ der Matteffekt von coextrudierten, biaxialen Polypropylenfolien nachhaltig gesteigert werden kann.

Die verwendeten, auf Ethylen basierenden Co- oder Terpolymere, die polare Gruppen tragen, werden normalerweise als Haftvermittler in einer Zwischenschicht in Verbundfolien benutzt, um zwei nicht zueinanderhaftende Polymerschichten zu verbinden. In einem solchen Verbund bewirkt die Haftvermittlerschicht keine hohe Trübung.

Als eine zusätzliche Komponente in einer an der Folienoberfläche liegenden Mattschicht reduzieren sie den Glanz, der u.a. für ein mattes Erscheinen der biaxial gereckten Folien verantwortlich ist.

Die angegebenen Rezepturen, die Gegenstand des Patentes sind, führen bei einer biaxialen Verstreckung zu der deutlichen Steigerung des matten Erscheinungsbildes.

Außerdem kann in biaxial orientierter Polypropylenfolie, die mit einer Mattscheibe nach angegebener Rezeptur hergestellt wird, die Schichtdicke der Mattschicht in weiten Bereichen variiert werden, ohne daß sich eine Veränderung der optischen Eigenschaften ergibt. Selbst mit Schichtdicken < 2 µm erhält man matte Folien.

Die erfindungsgemäße Folie hat vorzugsweise eine Gesamtdicke von 10 bis 40 µm.

Die Mattschicht M ist dadurch gekennzeichnet, daß sie vorzugsweise eine Dicke von 1 bis 4 µm hat und aus
- 40 - 70 %: Polypropylencopolymerisaten, hergestellt nach einem Verfahren der Blockcopolymerisation,
- 5 - 12 %: eines auf Ethylen basierenden Co- oder Terpolymeren, modifiziert mit polaren Gruppen,
- 55 - 16 %: eines Randomcopolymerisates aus Propylen und Ethylen mit einem Ethylengehalt von 2 bis 6 Gew.-%,
- 0 - 2 %: einer natürlichen Kieselsäure
besteht.

Die Kernschicht weist vorzugsweise eine Dicke von
- 9 - 39 µm: auf und besteht aus
- 97 - 100 %: eines isotaktischen Polypropylens, das einen Schmelzindex von 0,5 bis 8 g/10 min (230°C/21,2N),
- 3 - 0 %: Slip-, Antistatik und/oder Antiblockmittel.

Die Schichten S haben entweder eine vorzugsweise Dicke von 0,5 bis 1,5 µm und bestehen aus
- 97 - 100 %: eines isotaktischen Polypropylens mit einem Schmelzindex von 0,5 bis 8 g/10 min (230°C/21,2N)
oder
eines statistischen Propylen/Ethylen Copolymeren mit 3 bis 5 % Ethylen und einem Schmelzindex von 3 bis 16 g/10 min (230°C/21,2N)
oder
eines statischen Propylen/Ethylen Butylen Terpolymeren mit einem Comonomergehalt von < 12 % und einem Schmelzindex von 3 bis 16 g/10 min (230°C/21,2N) und
- 3 - 0 %: Slip-, Antistatik und/oder Antiblockmittel
oder haben eine vorzugsweise Dicke von 3 bis 15 µm und bestehen aus
- 65 - 95 %: Ethylenvinylacetat-Copolymeren
- 10 - 35 %: Ethylen-Ethylacrylat-Copolymeren
- 8 - 30 %: Ethylen-Acrylsäure-Copolymeren.

Anwendung findet eine erfindungsgemäße Folie als Klebstoff- oder Thermokaschierfolie für die graphische Industrie oder als heißsiegelbare Folie für eine Beutelfertigung oder Verbundfolienfertigung.

In den nachfolgenden Beispielen werden folgende Prüfmethoden und Verfahren zur Bestimmung der Werte und Eigenschaften verwendet:

Der Glanz wird nach ASTM D 2457 bestimmt. Er ist hier der unter einem Winkel von 45° reflektierte Lichtanteil in Glanzeinheiten GE, bezogen auf einem Schwarzglasspiegel, als 100 GE Standard.

Die Trübung wird nach ASTM D 1003 bestimmt. Sie wird in % angegeben und ist das Verhältnis von difuser Lichttransmission zu totaler Lichttransmission multipliziert mit 100.

Die Klarheit wird nach ASTM D 1746 bestimmt und in % angegeben und ist das Verhältnis von gerichteter Transmission mit Folie zu gerichteter Transmission ohne Folie multipliziert mit 100.

### Beispiele

### Verwendete Substanzen für die Mattschichten

### Polymer 1

Blockcopolymer PP/PE
MFI* (230°C / 21,2 N) 6 g/10 min.
Schmelzpunkt (DSC)* 164°C
Elastizitätsmodul (DIN 53457) 1550 N/mm²
*MFI = Melt flow index
*DSC = Differential Scanning Colorimetrie

### Polymer 2

Blockcopolymer PP/PE
MFI* (230°C / 21,2 N) 3 g/10 min.
Schmelzpunkt (DSC)* 162°C
Elastizitätsmodul (DIN 53457) 1300 N/mm²

### Polymer 3

Blockcopolymer PP/PE
MFI* (230°C / 21,2 N) 4 g/10 min.
Schmelzpunkt (DSC)* 169°C
Elastizitätsmodul (DIN 53457) 1000 N/mm²

### Polymer 4

Blockcopolymer PP/PE
MFI* (230°C / 21,2 N) 1,5 g/10 min.
Schmelzpunkt (DSC)* 155°C
Elastizitätsmodul (ASTM D 790) 1200 N/mm²
*MFI = Melt flow index
*DSC = Differential Scanning Colorimetrie

### Polymer 5

LDPE Elastomer- und Säureanhydrid-modifiziert
MFI* (230°C / 21,2 N) 4,3 g/10 min.
Schmelzpunkt (DSC)* 104°C

### Polymer 6

Terpolymer aus Ethylen/Butylacrylat und Maleinsäureanhydrid
MFI* (230°C / 21,2 N) 15,6 g/10 min.
Schmelzpunkt (DSC)* 92°C

### Polymer 7

Terpolymer aus Ethylen/Butylacrylat und Maleinsäureanhydrid
MFI* (230°C / 21,2 N) 17,9 g/10 min.
Schmelzpunkt (DSC)* 104°C

### Polymer 8

LLDPE säuremodifiziert
MFI* (230°C / 21,2 N) 6,2 g/10 min.
Schmelzpunkt (DSC)* 125°C

### Polymer 9

P/E Randomcopolymer mit 1000 ppm SiO₂
MFI* (230°C / 21,2 N) 4,7 g/10 min.
Schmelzpunkt (DSC)* 140°C
*MFI = Melt flow index
*DSC = Differential Scanning Colorimetrie

### Polymer 10

P/E/B - Ramdomterpolymer
MFI* (230°C / 21,2 N) 5 g/10 min.
Schmelzpunkt (DSC)* 130°C

### Polymer 11

Polyamid mit aliphatischen Cycloaliphatischen und aromatischen Grundbausteinen
Schmelzpunkt (DSC)* 155°C

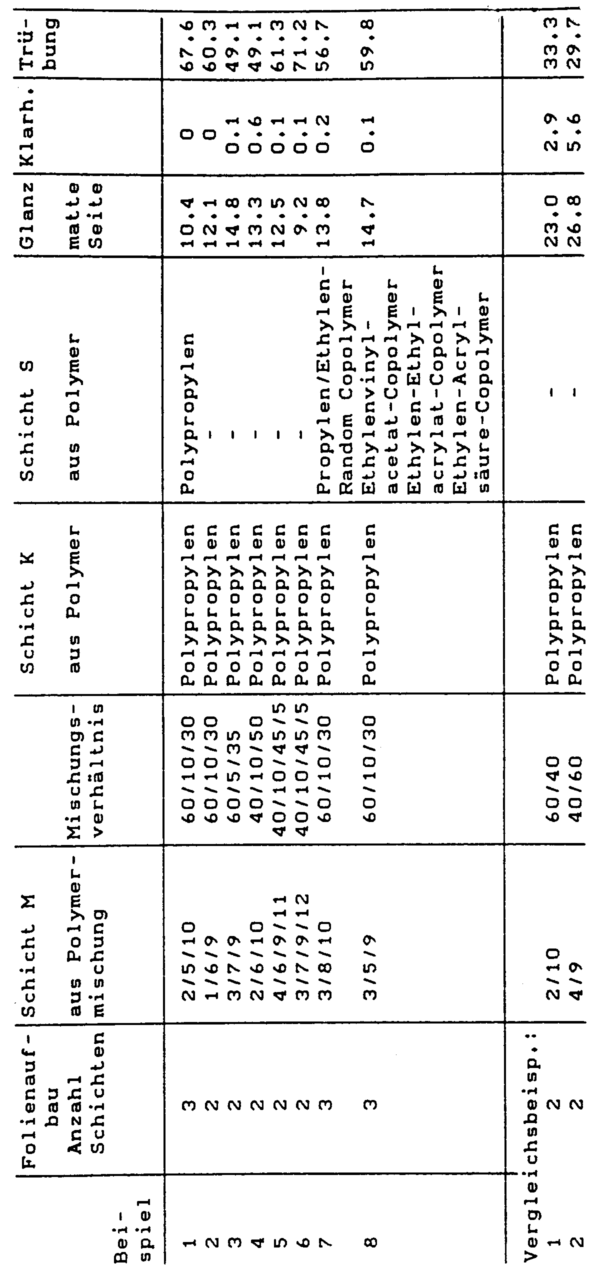

### Beispiel 1

Eine Mischung der Polymere 2/5/10 im Verhältnis 60/10/30 wird zu einem Batch verarbeitet. Dieses Batch bildet die Mattschicht und wird mit einer Polypropylenschicht, die im wesentlichen frei von Antiblockmitteln ist, aber Slip- und Antistatikadditive enthält und mit einer zweiten, mit Antiblockmitteln ausgerüsteten Polypropylenschicht coextrudiert. Danach erfolgt eine Längsverstreckung im Verhältnis 1:3,5 bis 1:5,5 und anschließend eine Querverstreckung im Verhältnis 1:7 bis 1:10. Auf der nicht matten Seite erhält die Folie vor dem Aufwickeln eine Coronavorbehandlung. Die Folie ist 15 µm dick, Dabei entfallen auf die Mattschicht 2,5 µm +- 1 µm, auf die 1. Polypropylenschicht 11 µm und die 2. Polypropylenschicht 1,5 µm. Die Folie wird für eine Klebstoffkaschierung von Druckerzeugnissen verwendet.

### Beispiel 2

Eine Mattschicht aus einer Mischung der Polymere 1/6/9 im Verhältnis 60/10/30 wird mit einer Polypropylenschicht, die als Additive Antiblock-, Antistatik- und Slipmittel enthält, coextrudiert. Danach erfolgt eine Längsverstreckung im Verhältnis 1:3,5 bis 5,5 und anschließend eine Querverstreckung im Verhältnis 1:7 bis 1:10. Auf der nicht matten Seite erhält die Folie vor dem Aufwickeln eine Coronavorbehandlung. Die Folie ist 12 µm dick. Die Mattschicht hat eine Dicke von 2,5 µm +- 1 µm. Angewendet wird eine solche Folie für Klebstoffkaschierungen von Druckerzeugnissen.

### Beispiel 3

- wie Beispiel 2: - jedoch mit Polymermischung 3/7/9 im Verhältnis 60/5/35 für die Mattschicht.

### Beispiel 4

- wie Beispiel 2: - jedoch mit Polymermischung 2/6/10 im Verhältnis 40/10/50 für die Mattschicht.

### Beispiel 5

- wie Beispiel 2: - jedoch mit Polymermischung 4/6/9/11 im Verhältnis 40/10/45/5 für die Mattschicht.

### Beispiel 6

- wie Beispiel 2: - jedoch mit Polymermischung 3/7/9/12 im Verhältnis 40/10/45/5 für die Mattschicht.

### Beispiel 7

Eine Mattschicht aus einer Mischung der Polymere 3/8/10 im Verhältnis 60/10/30 wird mit einer Polypropylenschicht, die im wesentlichen frei von Additiven ist und einer Siegelschicht aus Polymer 10 mit üblichen Additiven wie Antiblock-, Antistatik- und Slipmitteln coextrudiert. Danach erfolgt eine Längsverstreckung im Verhältnis 1:3,5 bis 1:5,5 und anschließend eine Querverstreckung im Verhältnis 1:7 bis 1:10. Vor dem Aufwickeln erfolgt eine mindestens einseitige Coronavorbehandlung. Die Folie hat eine Gesamtdicke von 20 µm, wobei auf die Mattschicht 2,5 µm +- 1 µm, die Polypropylenschicht 16,4 µm und die Siegelschicht 1,1 µm entfallen. Diese Folie eignet sich u.a. für das Bedrucken, Beutelfertigung auf horizontalen und vertikalen Schlauchbeutelmaschinen und in bedruckter und unbedruckter Form als Ausgangsfolie für diverse Verbundfolien.

### Beispiel 8

Eine Mattschicht aus einer Mischung der Polymere 3/5/9 im Verhältnis 60/10/30 wird mit einer Polypropylenschicht, die im wesentlichen frei von Antiblockmitteln ist, aber Slip- und Antistatikadditive enthält, coextrudiert und im Verhältnis 1:3,5 bis 1:5,5 längsverstreckt. Danach erfolgt, wie in EP 0 424 761 A2 beschrieben, eine Laminierung oder Extrusion einer heißkaschierten Schicht. Für diese Schicht werden in der vorzugsweisen Ausführungsform Mischungen aus
- 65 bis 95 Gew.-Teilen: Ethylenvinylacetat-Copolymer
- 10 bis 35 Gew.-Teilen: Ethylen-Ethylacrylat-Copolymer
- 8 bis 20 Gew.-Teilen: Ethylen-Acrylsäure-Copolymer
verwendet. Nach dem Aufbringen der heißkaschierbaren Schicht erfolgt ein Querverstrecken der Folie im Verhältnis von 1:7 bis 1:10.

Die so hergestellte heißkaschierbare Folie hat eine Gesamtdicke von 22 µm, wobei auf die Mattschicht 2,5 µm, die Polypropylenschicht 12,5 µm und auf die Heißkaschierschicht 7 µm entfallen. Eine solche Folie wird für die Veredelung von Druckerzeugnissen für die graphische Industrie eingesetzt.

### Vergleichsbeispiel 1

- wie Beispiel 2: - jedoch mit Polymermischung 2/10 im Verhältnis 60/40 für die Mattschicht.

### Vergleichsbeispiel 2

- wie Beispiel 2: - jedoch mit Polymermischung 4/9 im Verhältnis 40/60 für die Mattschicht.

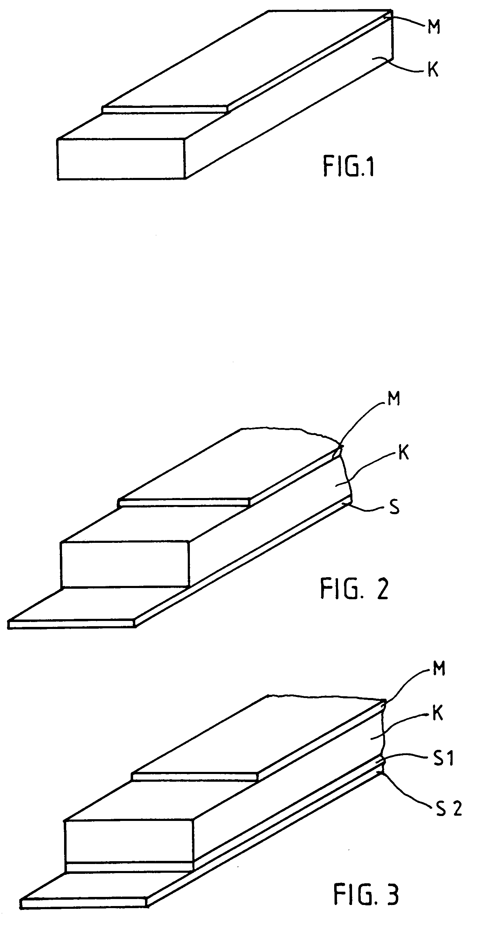

## Patentansprüche

1. Matte, zwei- oder mehrschichtige, biaxial gereckte Polypropylenfolien aus einer außen liegenden Mattschicht M, einer Kernschicht K und wahlweise weiteren Schichten S, die sich auf der gegenüberliegenden Seite der Mattschicht an die Kernschicht anschließen, dadurch gekennzeichnet, daß die Mattschicht M
eine Schichtdicke von 0,5 bis 5,0 µm hat und aus
30 - 70 % eines oder mehreren Polypropylen-Polyethylen-Blockcopolymeren
2 - 18 % eines auf Ethylen basierenden Co- oder Terpolymeren, modifiziert mit polaren Gruppen
2 - 68 % eines aus Propylen/Ethylen statistischen Copolymeren und/oder Propylen/Butylen statistischen Copolymeren und/oder Propylen/Ethylen/Butylen statistischen Terpolymeren mit Propylen als Hauptkomponente
0 - 5 % eines Polyamids
0 - 5 % einer natürlich oder synthetischen Kieselsäure
aufgebaut ist, wobei die o.a. Komponenten im Anlieferungszustand und/oder in Form von Batchen aus diesem eingesetzt werden,
daß die Kernschicht K
aus einem thermoplastischen Polymer und/oder Copolymer des Propylens, das mit üblichen Slip-, Antistatik- und/oder Antiblockmitteln ausgerüstet sein kann, daß die Schichten S,
die sich auf der gegenüberliegenden Seite der Mattschicht an die Kernschicht K anschließen, entweder aus einem thermoplastischen Polypropylen, das mit üblichen Slip-, Antistatik- und/oder Antiblockmitteln ausgerüstet sein kann, und/oder aus einem thermoplastischen, statistischen Copolymeren des Polypropylens mit einem oder mehreren α-Olefinen mit 2 bis 6 C-Atomen, das mit üblichen Slip-, und Antistatik- und/oder Antiblockmitteln ausgerüstet sein kann, oder aus einer heißkaschierbaren Schicht aus Mischungen aus Ethylen basierenden Copolymeren oder aus einer Schichtenkombination der o.a. Schichten S bestehen.

2. Folie gemäß Anspruch 1, dadurch gekennzeichnet, daß eine zweite Mattschicht M auf die Kernschicht K oder die Schicht S aufgebracht ist.

3. Folie nach Anspruch 1, dadurch gekennzeichnet, daß zur Herstellung zuerst ein 2-3-schichtiger Film nach an sich bekanntem Verfahren coextrudiert wird. Dieser coextrudierte Film wird nach dem Verlassen der Breitschlitzdüse derart abgekühlt, daß die Mattschicht eine möglichst langsame Abkühlung erfährt. Anschließend wird der Film erneut auf ca. 100 bis 130°C aufgeheizt und erfährt eine Längsreckung im Verhältnis von 1:3 bis 1:7. Nach der Längsreckung erfolgt bei Temperaturen zwischen 150°C und 180°C eine Querrekkung im Verhältnis von 1:7 bis 1:12. Vor dem Auslauf aus dem Recktunnel wird der Film thermofixiert. Er wird vor dem Aufwickeln mindestens auf einer Seite mit einer Coronaentladung behandelt.

4. Folie nach Anspruch 1, dadurch gekennzeichnet, daß zur Herstellung einer 3-4-schichtigen Folie zuerst eine gemeinsame 2-3-schichtige Coextrusion der Mattschicht M, der Kernschicht K und gegebenenfalls einer Schicht S, die gemäß Anspruch 3 längsverstreckt wird. Zwischen Einlauf in den Querreckteil erfolgt nun eine Laminierung oder Extrusionsbeschichtung mit einer weiteren Schicht S₂. Nach dem Aufbringen dieser Schicht erfolgt eine gemeinsame Querverstreckung des Folienverbundes im Verhältnis 1:7 bis 1:12, der wie üblich eine Thermofixierung und Coronabehandlung folgt.

## Claims

1. Mat, two- or multi-layer, biaxially stretched polypropylene films consisting of an external mat layer M, a core layer K and, optionally, further layers S which adjoin the core layer K on the side opposite the mat layer, characterised in that the mat layer M has a layer thickness of 0.5 to 5.0 µm and is composed of
30 - 70 % of one or a plurality of polypropylene-polyethylene block copolymers
2 - 18 % of an ethylene-base copolymer or terpolymer, modified by polar groups
2 - 68 % of a random copolymer of propylene/ethylene and/or a random copolymer of propylene/butylene and/or a random terpolymer of propylene/ethylene/butylene with propylene as the main component
0 - 5 % of a polyamide
0 - 5 % of a natural or synthetic silica,
wherein the above-mentioned components are used in the supplied state and/or in the form of batches of this, that the core layer K consists of a thermoplastic polymer and/or copolymer of propylene, which may be provided with conventional slip, antistatic and/or anti-blocking agents, that the layers S, which adjoin the core layer K on the side opposite the mat layer, consist either of a thermoplastic polypropylene, which may be provided with conventional slip, antistatic and/or anti-blocking agents, and/or of a thermoplastic, random copolymer of polypropylene with one or a plurality of α-olefins with 2 to 6 C atoms, which may be provided with conventional slip and antistatic and/or anti- blocking agents, or of a thermally bondable layer of mixtures of ethylene-base copolymers or of a layer combination of the above-mentioned layers S.

2. Film according to claim 1, characterised in that a second mat layer M is applied to the core layer K or the layer S.

3. Film according to claim 1, characterised in that, for manufacturing the latter, a 2-3 layer film is firstly coextruded according to a process which is known per se. This coextruded film is cooled after leaving the flat-sheet die such that the mat layer is cooled as slowly as possible. The film is then re-heated to approximately 100 to 130°C and longitudinally stretched in the ratio of 1 : 3 to 1 : 7. The longitudinal stretching is followed by transverse stretching in the ratio of 1 : 7 to 1 : 12 at temperatures between 150°C and 180°C. The film is thermoset before leaving the stretching tunnel. It is treated with a corona discharge at least on one side before being wound up.

4. Film according to claim 1, characterised in that the manufacture of a 3-4 layer film consists firstly in a common 2-3 layer coextrusion of the mat layer M, the core layer K and possibly a layer S, which is longitudinally stretched according to claim 3. Laminating or extrusion coating with a further layer S₂ then takes place before the film enters the transverse stretching part. The application of this layer is followed by common transverse stretching of the film composite in the ratio of 1 : 7 to 1 : 12, which is followed, as is usual, by thermosetting and corona treatment.

## Revendications

1. Feuilles de polypropylène mates, bi- ou multicouches, ayant subi un étirage biaxial, constituées par une couche mate externe M, une couche centrale K et, le cas échéant, d'autres couches S qui se raccordent à la couche centrale sur le côté opposé à celui de la couche mate,
caractérisées en ce que la couche mate M possède une épaisseur de 0,5 à 5,0 µm et est composée
à concurrence de 30 à 70%, d'un ou de plusieurs copolymères séquencés de polypropylène-polyéthylène,
à concurrence de 2 à 18%, d'un co- ou terpolymère à base d'éthylène, modifié avec des groupes polaires,
à concurrence de 2 à 68%, d'un copolymère statistique de propylène/éthylène et/ou d'un copolymère statistique de propylène/butylène et/ou d'un terpolymère statistique de propylène/éthylène/butylène, le propylène représentant le composant principal,
à concurrence de 0 à 5%, d'un polyamide,
à concurrence de 0 à 5%, d'un acide silicique naturel ou synthétique,
les composants mentionnés ci-dessus étant mis en oeuvre à l'état tel que livré et/ou sous forme de lots préparés à partir de ce dernier,
en ce que la couche centrale K
est constituée par un polymère et/ou un copolymère thermoplastique du propylène qui peut être muni d'agents de glissement, d'agents antistatiques et/ou d'agents d'antiblocage habituels,
en ce que les couches S,
qui se raccordent à la couche centrale K sur le côté opposé à celui de la couche mate, sont constituées par un polypropylène thermoplastique qui peut être muni d'agents de glissement, d'agents antistatiques et/ou d'agents d'antiblocage habituels, et/ou par un copolymère statistique thermoplastique du polypropylène avec une ou plusieurs α-oléfines contenant de 2 à 6 atomes de carbone, qui peut être muni d'agents de glissement, d'agents antistatiques et/ou d'agents d'antiblocage habituels, ou encore par une couche apte à être contrecollée par voie thermique, constituée par des mélanges de copolymères à base d'éthylène, ou bien encore par une combinaison des couches S indiquées ci-dessus.

2. Feuille selon la revendication 1, caractérisée en ce qu'une seconde couche mate M est appliquée sur la couche centrale K ou sur la couche S.

3. Feuille selon la revendication 1, caractérisée en ce que, pour la préparation, on procède d'abord à une coextrusion d'un film contenant 2-3 couches, conformément à un procédé connu en soi; on refroidit ce film coextrudé après qu'il a quitté la tuyère à fente large de telle sorte que la couche mate subit un refroidissement le plus lent possible; ensuite, on chauffe à nouveau le film à une température d'environ 100 à 130°C et on le soumet à un étirage longitudinal dans le rapport de 1:3 à 1:7; après l'étirage longitudinal, on procède à un étirage transversal à des températures entre 150°C et 180°C dans le rapport de 1:7 à 1:12; on soumet le film à un thermofixage avant sa sortie du tunnel d'étirage; on le soumet, avant son enroulement, au moins d'un côté, à un traitement de décharge à effluves négatives.

4. Feuille selon la revendication 1, caractérisée en ce que, pour la préparation d'une feuille contenant 3-4 couches, on procède d'abord à une coextrusion conjointe de la couche mate M, de la couche centrale K et éventuellement d'une couche S pour obtenir un film contenant 2-3 couches que l'on soumet à un étirage longitudinal selon la revendication 3; entre (la sortie du poste d'étirage longitudinal et) l'entrée dans le poste d'étirage transversal, a lieu une stratification ou une enduction par extrusion avec une couche supplémentaire S2; après l'application de cette couche, on procède à un étirage transversal conjoint de la feuille composite dans le rapport 1:7 à 1:12, auquel font suite un thermofixage et un traitement de décharge à effluves négatives, comme c'est le cas habituellement.
